# EUROPEAN PATENT SPECIFICATION

(11) **EP 3 294 028 B1**
(45) Date of publication and mention of the grant of the patent: **07.10.2020**
(21) Application number: 15901408.3
(22) Date of filing: 18.08.2015
(51) Int. Cl.: H04W 16/14, H04W 74/00, H04W 92/20

(54) **DATA TRANSMISSION METHOD, DEVICE AND SYSTEM**
DATENÜBERTRAGUNGSVERFAHREN, -VORRICHTUNG UND -SYSTEM
PROCÉDÉ, DISPOSITIF ET SYSTÈME DE TRANSMISSION DE DONNÉES

(43) Date of publication of application: 14.03.2018
(73) Proprietor: Huawei Technologies Co., Ltd., Longgang District Shenzhen, Guangdong 518129 (CN)
(72) Inventor: LI, Xiaocui, Shenzhen Guangdong 518129 (CN); XU, Kai, Shenzhen Guangdong 518129 (CN)
(74) Representative: Maiwald Patent- und Rechtsanwaltsgesellschaft mbH
(86) International application number: PCT/CN2015/087409
(87) International publication number: WO 2017/028204

(56) References cited:
- WO-A1-2015/076938
- WO-A1-2015/103776
- CN-A- 102 665 279
- CN-A- 104 301 273
- CN-A- 104 333 873
- CN-A- 104 380 780
- US-A1- 2014 341 018
- US-B2- 7 633 996

## Description

### TECHNICAL FIELD

The present invention relates to the communications field, and in particular, to a data transmission method, a device, and a system.

### BACKGROUND

Spectrums used in a wireless communications system fall into two categories: a licensed spectrum (English: licensed spectrum) and an unlicensed spectrum (English: unlicensed spectrum). For a commercial mobile communications system, an operator needs to obtain the licensed spectrum by means of auction. After being authorized, the operator may use a corresponding spectrum to carry out a mobile communications operation activity. The unlicensed spectrum does not need to be auctioned. Any device can be authorized to use these frequency bands corresponding to the unlicensed spectrum , for example, Wireless Fidelity(Wireless Fidelity, WiFi) devices on a 2.4 GHz frequency band and a 5 GHz frequency band. Generally, a carrier on the licensed spectrum is referred to as a licensed carrier, and a carrier on the unlicensed spectrum is referred to as an unlicensed carrier. With development of wireless communications technologies, an amount of information transmitted in a wireless communications network gradually increases. Preempting the unlicensed carrier to transmit information may improve a data throughput in the wireless communications network, and better meet a user requirement. In a licensed-assisted access using Long Term Evolution (English full name: Licensed-Assisted Access Using Long Term Evolution, LAA-LTE for short) system, a node in LAA-LTE uses a channel resource by using a listen before talk (English full name: listen before talk, LBT for short) principle. The LBT is a carrier sense multiple access (English full name: Carrier Sense Multiple Access, CSMA for short) technology.

WO 2015/076938 A1 describes methods, and/or devices for wireless communications, and more particularly, to downlink coordinated multi-point, CoMP, transmissions when accessing an unlicensed radio frequency spectrum band.

According to some therein described methods, a base station may perform a contention procedure, such as a clear channel assessment, CCA, procedure, for access to the unlicensed radio frequency spectrum band.

In the licensed-assisted access using Long Term Evolution system, when different unlicensed eNBs (unlicensed eNB) access a channel in an LBT channel access manner, the unlicensed eNBs preempt the channel at a random time, and the eNBs do not know when there is a relatively large probability of successfully accessing the channel.

### SUMMARY

The invention is defined by the appended independent claims and further embodiments are described by the dependent claims. Any reference to inventions or embodiments not falling within the scope of the independent claims are to be interpreted as examples useful for understanding the invention. Aspects of the present invention provide a data transmission method, a device, and a system as defined by the independent claims, so as to increase a probability of successfully accessing a channel.

To achieve the foregoing objective, the following technical solutions are used in the embodiments of the present invention.

Herein described is, a data transmission method is provided, including:
obtaining, by a first device, status information of sending data by the first device by using an unlicensed carrier; and
sending, by the first device to a second device, the status information of sending the data, so that the second device adjusts, according to the status information, a parameter used when the second device preempts the unlicensed carrier.

With reference to the first aspect, in a first possible implementation, the sending, by the first device to a second device, the status information of sending the data includes:
configuring, by the first device, a message instruction on an X2 interface, where the message instruction includes the status information; and
sending, by the first device, the message instruction to the second device by using the X2 interface.

Herein described is, the status information includes at least one or more of the following items: a start moment of sending the data, duration of sending the data, an end moment of sending the data, or a carrier number or a carrier group number of sending the data.

Herein described is, the parameter is a parameter of an extended clear channel assessment ECCA.

Herein described is, a data transmission method is provided, including:
receiving, by a second device, status information that is sent by a first device and that is of sending data by the first device by using an unlicensed carrier; and
adjusting, by the second device according to the status information, a parameter used when the second device preempts the unlicensed carrier.

Herein described is, the receiving, by a second device, status information receiving, by a second device, status information sent by the first device includes:
receiving, by the second device by using an X2 interface, a message instruction sent by the first device, where the message instruction includes the status information; and
obtaining, by the second device, the status information from the message instruction.

Herein described is, the status information includes at least one or more of the following items: a start moment of sending the data, duration of sending the data, an end moment of sending the data, or a carrier number or a carrier group number of sending the data.

Herein described is, the parameter is a parameter of an extended clear channel assessment ECCA.

Herein described is, a first device is provided, including:
a processing unit, configured to obtain status information of sending data by the first device by using an unlicensed carrier; and
a sending unit, configured to send, to a second device, the status information that is of sending the data and that is obtained by the processing unit, so that the second device adjusts, according to the status information, a parameter used when the second device preempts the unlicensed carrier.

Herein described is, the sending unit includes:
a configuration subunit, adapted to configure a message instruction on an X2 interface, where the message instruction includes the status information; and
a sending subunit, configured to send, to the second device by using the X2 interface, the message instruction configured by the configuration subunit.

Herein described is, the status information includes at least one or more of the following items: a start moment of sending the data, duration of sending the data, an end moment of sending the data, or a carrier number or a carrier group number of sending the data.

Herein described is, the parameter is a parameter of an extended clear channel assessment ECCA.

Herein described is, a second device is provided, including:
a receiving unit, configured to receive status information that is sent by a first device and that is of sending data by the first device by using an unlicensed carrier; and
a processing unit, configured to adjust, according to the status information received by the receiving unit, a parameter used when the second device preempts the unlicensed carrier.

With reference to the fourth aspect, in a first possible implementation, the receiving unit includes:
a receiving subunit, configured to receive, by using an X2 interface, a message instruction sent by the first device, where the message instruction includes the status information; and
a processing subunit, configured to obtain the status information from the message instruction received by the receiving subunit.

Herein described is, the status information includes at least one or more of the following items: a start moment of sending the data, duration of sending the data, an end moment of sending the data, or a carrier number or a carrier group number of sending the data.

Herein described is, the parameter is a parameter of an extended clear channel assessment ECCA.

Herein described is, a first device is provided, including a processor, an interface circuit, a memory, and a bus, where the processor, the interface circuit, and the memory are connected to and communicate with each other by using the bus;
the processor is configured to obtain status information of sending data by the first device by using an unlicensed carrier; and
the interface circuit is configured to send, to a second device, the status information that is of sending the data and that is obtained by the processor, so that the second device adjusts, according to the status information, a parameter used when the second device preempts the unlicensed carrier.

Herein described is, the interface circuit is specifically configured to: configure a message instruction on an X2 interface, where the message instruction includes the status information; and send the message instruction to the second device by using the X2 interface.

Herein described is, the status information includes at least one or more of the following items: a start moment of sending the data, duration of sending the data, an end moment of sending the data, or a carrier number or a carrier group number of sending the data.

Herein described is, the parameter is a parameter of an extended clear channel assessment ECCA.

Herein described is, a second device is provided, including a processor, an interface circuit, a memory, and a bus, where the processor, the interface circuit, and the memory are connected to and communicate with each other by using the bus;
the interface circuit is configured to receive status information that is sent by a first device and that is of sending data by the first device by using an unlicensed carrier; and
the processor is configured to adjust, according to the status information received by the interface circuit, a parameter used when the second device preempts the unlicensed carrier.

Herein described is, the interface circuit is specifically configured to: receive, by using an X2 interface, a message instruction sent by the first device, where the message instruction includes the status information; and obtain the status information from the message instruction.

Herein described is, the status information includes at least one or more of the following items: a start moment of sending the data, duration of sending the data, an end moment of sending the data, or a carrier number or a carrier group number of sending the data.

Herein described is, the parameter is a parameter of an extended clear channel assessment ECCA.

According to the data transmission method, the device, and the system that are provided in the embodiments of the present invention, the first device obtains the status information of sending the data by the first device by using the unlicensed carrier, and sends, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of the channel in a timelier manner, thereby increasing the probability of successfully accessing the channel.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a communications system according to an embodiment of the present invention;
FIG. 2 is a schematic flowchart of a data transmission method according to an embodiment of the present invention;
FIG. 3 is a schematic flowchart of a data transmission method according to another embodiment of the present invention;
FIG. 4 is a schematic structural diagram of a first device according to an embodiment of the present invention;
FIG. 5 is a schematic structural diagram of a first device according to another embodiment of the present invention;
FIG. 6 is a schematic structural diagram of a second device according to an embodiment of the present invention;
FIG. 7 is a schematic structural diagram of a second device according to another embodiment of the present invention;
FIG. 8 is a schematic structural diagram of a first device according to still another embodiment of the present invention; and
FIG. 9 is a schematic structural diagram of a second device according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as a Global System for Mobile Communications (Global System for Mobile communications, GSM), a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, LTE time division duplex (Time Division Duplex, TDD), a Universal Mobile Telecommunications System (Universal Mobile Telecommunications System, UMTS), and a Worldwide Interoperability for Microwave Access (Worldwide Interoperability for Microwave Access, WiMAX) communications system.

The terms "first" and "second" are merely used for description, and shall not be understood as an indication or implication of relative importance or an implicit indication of a quantity of indicated technical features. Therefore, a feature limited by "first" or "second" may explicitly or implicitly include one or more features. In the following embodiments, "first" and "second" are merely used for distinguishing a first device, a second device, and the like. The first device or the second device includes a base station, user equipment, or another network element device in networking.

The user equipment (English full name: User Equipment, UE for short) provided in the embodiments of the present invention may be a cellular phone, a cordless phone, a Session Initiation Protocol (English full name: Session Initiation Protocol, SIP for short) phone, a wireless local loop (English full name: Wireless Local Loop, WLL for short) station, a personal digital assistant (English full name: Personal Digital Assistant, PDA for short), a handheld device having a wireless communications function, an in-vehicle device, a wearable device, a computing device, or another device connected to a wireless modem.

The base station provided in the embodiments of the present invention may be a device that communicates with user equipment by using one or more sectors on an air interface in an access network. The base station may be configured to mutually convert a received over-the-air frame and an Internet Protocol (English full name: Internet Protocol, IP for short) packet and serve as a router between the user equipment and a remaining portion of the access network, where the remaining portion of the access network may include an IP network. The base station may further coordinate attribute management of the air interface. The base station may be a base transceiver station (English full name: Base Transceiver Station, BTS for short) in a Global System for Mobile Communications (English full name: Global System for Mobile communications, GSM for short) or Code Division Multiple Access (English full name: Code Division Multiple Access, CDMA for short), or may be a base station (English full name: Base Station, BS for short) in Wideband Code Division Multiple Access (English full name: Wideband Code Division Multiple Access, WCDMA for short), or may be an evolved NodeB (English full name: evolved Node B, NodeB, eNB, or eNodeB for short) in Long Term Evolution (English full name: Long Term Evolution, LTE for short), or may be a macro base station or a micro base station in a cellular wireless communications system. This is not limited in the embodiments of the present invention.

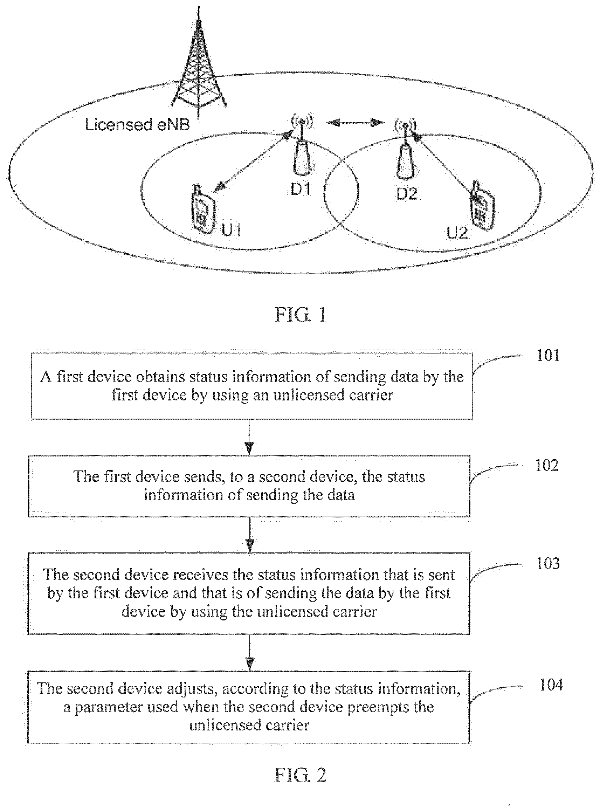

The embodiments of the present invention are applied to a communications system shown in FIG. 1. The communications system includes a first device D1, a second device D2, a receiving device U1 corresponding to the first device D1, and a receiving device U2 corresponding to the second device D2. When the first device and the second device are used as sending devices, data transmission needs to be performed between the receiving device and each of the first device and the second device by using an unlicensed carrier. Therefore, the first device and the second device need to preempt channel resources on the unlicensed carrier in an LBT manner. Optionally, both the first device and the second device are unlicensed eNBs within coverage of a licensed eNB.

Specifically, an embodiment of the present invention provides a data transmission method. As shown in FIG. 2, the method includes the following steps.

101. A first device obtains status information of sending data by the first device by using an unlicensed carrier.

Specifically, in step 101, the first device may preempt a channel on the unlicensed carrier in an LBT manner, and send the data by using the preempted channel. Specifically, a specific procedure of accessing a channel in the LBT channel access manner is as follows: Before the data is transmitted, a clear channel assessment (clear channel assessment, CAA) needs to be performed on the channel. If the channel is idle, the channel is directly occupied to send the data. If it is found that the channel is occupied, an extended clear channel assessment (Extended CCA, ECCA) needs to be performed. An ECCA process is a process in which N unoccupied idle timeslots (English full name: unoccupied idle timeslot, generally indicating duration of one ECCA) are found on the assessed channel. A value range of N is [1, q], q is a size of a contention window, and a value range of q is [X, Y]. Each time a new ECCA is performed, a value of q is changed. A value of N is randomly selected each time. Each time an unoccupied idle timeslot is found, the value of N is decreased by 1, until N=0. Then, the channel can be occupied to send the data.

It should be noted that, for step 101, the method provided in this embodiment may be for a single-carrier scenario. In this case, the first device preempts a channel separately in the LBT manner for each unlicensed carrier. In addition, in a multi-carrier scenario, several carriers in each cell may be grouped, and a channel is preempted for each carrier subset (each carrier subset includes multiple carriers) in the LBT manner according to the foregoing manner.

102. The first device sends, to a second device, the status information of sending the data, so that the second device adjusts, according to the status information, a parameter used when the second device preempts the unlicensed carrier.

The parameter used when the second device preempts the unlicensed carrier is a parameter of an extended clear channel assessment ECCA. In step 102, after preempting the channel and before sending the data, the first device sends, to the second device, the status information of sending the data, so that the second device can adjust, in a timely manner in step 104, the parameter used when the second device preempts the unlicensed carrier. The status information includes at least one or more of the following items: a start moment of sending the data, duration of sending the data, an end moment of sending the data, or a carrier number or a carrier group number of sending the data.

In the single-carrier scenario, the status information is status information of sending data by using an independent carrier. In the multi-carrier scenario, the status information is status information of sending data by using a corresponding carrier subset.

103. The second device receives the status information that is sent by the first device and that is of sending the data by the first device by using the unlicensed carrier.

104. The second device adjusts, according to the status information, the parameter used when the second device preempts the unlicensed carrier.

The parameter used when the second device preempts the unlicensed carrier is the parameter of the extended clear channel assessment ECCA. For example, step 104 is specifically that the second device performs a clear channel assessment CCA on the channel on the unlicensed carrier. Before data is transmitted, a CCA needs to be performed on the channel. If the channel is idle, the channel is directly occupied to send the data. If it is found that the channel is occupied, the parameter that is of the ECCA and that is used when the second device preempts the channel is adjusted according to the status information, and an ECCA is performed on the channel according to the specified parameter. The parameter of the ECCA is a quantity N of backoff idle timeslots. That the ECCA is performed on the channel according to the specified parameter specifically includes: finding N unoccupied idle timeslots (English full name: unoccupied idle timeslot, generally indicating duration of one ECCA) on the assessed channel. A value range of N is [1, q], q is a size of a contention window, and a value range of q is [X, Y]. Each time a new ECCA is performed, a value of q is changed. A value of N is randomly selected each time. Each time an unoccupied idle timeslot is found, the value of N is decreased by 1, until N=0. Then, the channel can be occupied to send the data. Because the quantity N of backoff idle timeslots in an ECCA process is specified according to the status information of sending the data by the first device, the second device may set a shortest ECCA process according to information such as the start moment of sending the data by the first device, the duration of sending the data by the first device, the end moment of sending the data by the first device, or the carrier number or the carrier group number of sending the data by the first device, so as to successfully preempt the channel as soon as possible, thereby increasing a probability of successfully accessing the channel.

According to the data transmission method provided in this embodiment of the present invention, the first device obtains the status information of sending the data by the first device by using the unlicensed carrier, and sends, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of the channel in a timelier manner, thereby increasing the probability of successfully accessing the channel.

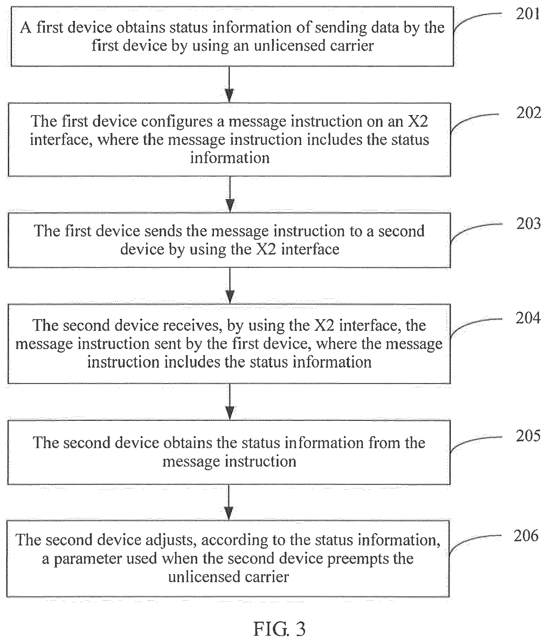

Specifically, an embodiment of the present invention provides another data transmission method. As shown in FIG. 3, the method includes the following steps. 201. A first device obtains status information of sending data by the first device by using an unlicensed carrier.

202. The first device configures a message instruction on an X2 interface, where the message instruction includes the status information.

Optionally, the status information includes at least one or more of the following items: a start moment of sending the data, duration of sending the data, an end moment of sending the data, or a carrier number or a carrier group number of sending the data. In a single-carrier scenario, the status information is status information of sending data by using an independent carrier. In a multi-carrier scenario, the status information is status information of sending data by using a corresponding carrier subset.

203. The first device sends the message instruction to a second device by using the X2 interface.

In step 203, after preempting a channel and before sending the data, the first device sends the message instruction to the second device on the X2 interface, so that the second device can adjust, in a timely manner in step 206, a parameter used when the second device preempts the unlicensed carrier.

204. The second device receives, by using the X2 interface, the message instruction sent by the first device, where the message instruction includes the status information.

205. The second device obtains the status information from the message instruction. The status information is status information of sending the data by the first device on a channel on the currently used unlicensed carrier.

206. The second device adjusts, according to the status information, a parameter used when the second device preempts the unlicensed carrier.

The parameter used when the second device preempts the unlicensed carrier is a parameter of an extended clear channel assessment ECCA. For example, step 206 is specifically that the second device performs a clear channel assessment CCA on the channel on the unlicensed carrier. Before data is transmitted, a CCA needs to be performed on the channel. If the channel is idle, the channel is directly occupied to send the data. If it is found that the channel is occupied, the parameter that is of the ECCA and that is used when the second device preempts the channel is adjusted according to the status information, and an ECCA is performed on the channel according to the specified parameter. The parameter of the ECCA is a quantity N of backoff idle timeslots. That the ECCA is performed on the channel according to the specified parameter specifically includes: finding N unoccupied idle timeslots (English full name: unoccupied idle timeslot, generally indicating duration of one ECCA) on the assessed channel. A value range of N is [1, q], q is a size of a contention window, and a value range of q is [X, Y]. Each time a new ECCA is performed, a value of q is changed. A value of N is randomly selected each time. Each time an unoccupied idle timeslot is found, the value of N is decreased by 1, until N=0. Then, the channel can be occupied to send the data. Because the quantity N of backoff idle timeslots in an ECCA process is specified according to the status information of sending the data by the first device, the second device may set a shortest ECCA process according to information such as the start moment of sending the data by the first device, the duration of sending the data by the first device, the end moment of sending the data by the first device, or the carrier number or the carrier group number of sending the data by the first device, so as to successfully preempt the channel as soon as possible, thereby increasing a probability of successfully accessing the channel.

According to the data transmission method provided in this embodiment of the present invention, the first device obtains the status information of sending the data by the first device by using the unlicensed carrier, and sends, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of the channel in a timelier manner, thereby increasing the probability of successfully accessing the channel.

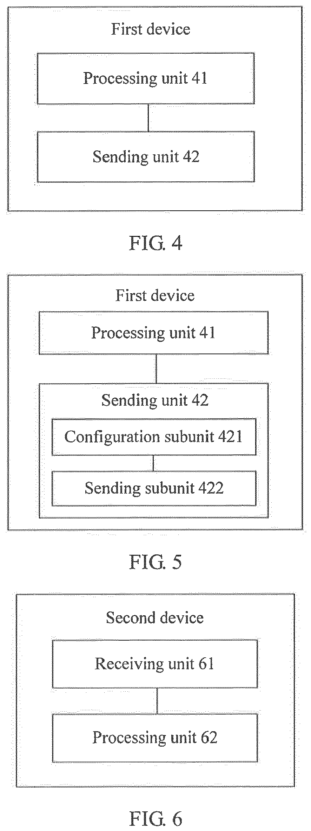

As shown in FIG. 4, an embodiment of the present invention provides a first device, to implement the foregoing data transmission method. The first device includes:
a processing unit 41, configured to obtain status information of sending data by the first device by using an unlicensed carrier; and
a sending unit 42, configured to send, to a second device, the status information that is of sending the data and that is obtained by the processing unit 41, so that the second device adjusts, according to the status information, a parameter used when the second device preempts the unlicensed carrier.

As shown in FIG. 5, the sending unit 42 includes:
a configuration subunit 421, adapted to configure a message instruction on an X2 interface, where the message instruction includes the status information; and
a sending subunit 422, configured to send, to the second device by using the X2 interface, the message instruction configured by the configuration subunit 421. Optionally, the status information includes at least one or more of the following items: a start moment of sending the data, duration of sending the data, an end moment of sending the data, or a carrier number or a carrier group number of sending the data. Optionally, the parameter is a parameter of an extended clear channel assessment ECCA.

It should be noted that the sending unit 42 in this embodiment may be an interface circuit, such as a transmitter, that is on the first device and that has a transmitting function. The processing unit 41 may be a separately disposed processor, or may be implemented by being integrated into a processor of the first device. In addition, the processing unit 41 may be stored in a memory of the first device in a form of program code, and a processor of the first device invokes and performs the foregoing function of the processing unit 41. The processor described herein may be a central processing unit (English full name: Central Processing Unit, CPU for short), or an application-specific integrated circuit (English full name: Application-Specific Integrated Circuit, ASIC for short), or may be configured as one or more integrated circuits for implementing this embodiment of the present invention.

The first device provided in this embodiment of the present invention can obtain the status information of sending the data by the first device by using the unlicensed carrier, and send, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of a channel in a timelier manner, thereby increasing a probability of successfully accessing the channel.

As shown in FIG. 6, an embodiment of the present invention provides a second device, to implement the foregoing data transmission method. The second device includes:
a receiving unit 61, configured to receive status information that is sent by a first device and that is of sending data by the first device by using an unlicensed carrier; and
a processing unit 62, configured to adjust, according to the status information received by the receiving unit 61, a parameter used when the second device preempts the unlicensed carrier.

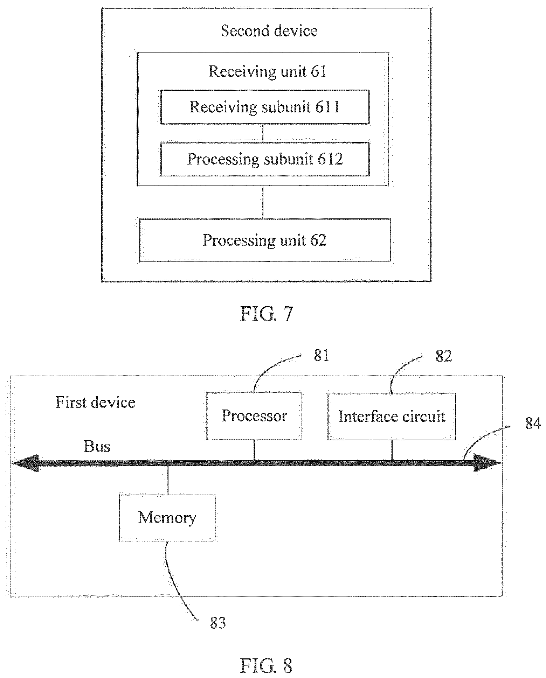

As shown in FIG. 7, the receiving unit 61 includes:
a receiving subunit 611, configured to receive, by using an X2 interface, a message instruction sent by the first device, where the message instruction includes the status information; and
a processing subunit 612, configured to obtain the status information from the message instruction received by the receiving subunit 611.

Optionally, the status information includes at least one or more of the following items: a start moment of sending the data, duration of sending the data, an end moment of sending the data, or a carrier number or a carrier group number of sending the data. Optionally, the parameter is a parameter of an extended clear channel assessment ECCA.

It should be noted that the receiving unit 61 in this embodiment may be an interface circuit, such as a transmitter, that is on the second device and that has a transmitting function. The processing unit 62 may be a separately disposed processor, or may be implemented by being integrated into a processor of the second device. In addition, the processing unit 62 may be stored in a memory of the second device in a form of program code, and a processor of the second device invokes and performs the foregoing function of the processing unit 62. The processor described herein may be a central processing unit (English full name: Central Processing Unit, CPU for short), or an application-specific integrated circuit (English full name: Application-Specific Integrated Circuit, ASIC for short), or may be configured as one or more integrated circuits for implementing this embodiment of the present invention.

According to the second device provided in this embodiment of the present invention, the first device can obtain the status information of sending the data by the first device by using the unlicensed carrier, and send, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of a channel in a timelier manner, thereby increasing a probability of successfully accessing the channel.

As shown in FIG. 8, an embodiment of the present invention provides a first device, including a processor 81, an interface circuit 82, a memory 83, and a bus 84. The processor 81, the interface circuit 82, and the memory 83 are connected to and communicate with each other by using the bus 84.

It should be noted that the processor 81 herein may be one processor, or may be a general term of multiple processing elements. For example, the processor may be a central processing unit CPU, or may be an application-specific integrated circuit ASIC, or may be configured as one or more integrated circuits for implementing this embodiment of the present invention, for example, one or more digital signal processors (English full name: digital signal processor, DSP for short) or one or more field programmable gate arrays (English full name: Field Programmable Gate Array, FPGA for short).

The memory 83 may be one storage apparatus or may be a general term of multiple storage elements, and is configured to store executable program code or a parameter, data, and the like that are required for running an access network management device. In addition, the memory 83 may include a random-access memory (English full name: random-access memory, RAM for short), or may include a nonvolatile random access memory (English full name: nonvolatile random access memory, NVRAM for short), for example, a magnetic disk memory or a flash memory (Flash).

The bus 84 may be an industry standard architecture (English full name: Industry Standard Architecture, ISA for short) bus, a peripheral component interconnect (English full name: Peripheral Component Interconnect , PCI for s hort) bus, an extended industry standard architecture (English full name: Extended Industry Standard Architecture, EISA for short) bus, or the like. The bus 84 may be classified into an address bus, a data bus, a control bus, and the like. For ease of representation, only one bold line is used in FIG. 8 for representation, but it does not indicate that there is only one bus or one type of bus.

The processor 81 is configured to obtain status information of sending data by the first device by using an unlicensed carrier.

The interface circuit 82 is configured to send, to a second device, the status information that is of sending the data and that is obtained by the processor 81, so that the second device adjusts, according to the status information, a parameter used when the second device preempts the unlicensed carrier.

Optionally, the interface circuit 82 is specifically configured to: configure a message instruction on an X2 interface, where the message instruction includes the status information; and send the message instruction to the second device by using the X2 interface.

Optionally, the status information includes at least one or more of the following items: a start moment of sending the data, duration of sending the data, an end moment of sending the data, or a carrier number or a carrier group number of sending the data. Optionally, the parameter is a parameter of an extended clear channel assessment ECCA.

The first device provided in this embodiment of the present invention can obtain the status information of sending the data by the first device by using the unlicensed carrier, and send, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of a channel in a timelier manner, thereby increasing a probability of successfully accessing the channel.

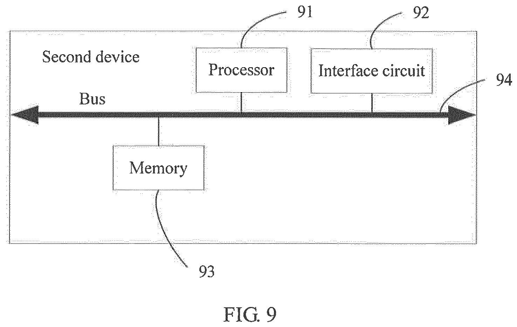

As shown in FIG. 9, an embodiment of the present invention provides a second device, including a processor 91, an interface circuit 92, a memory 93, and a bus 94. The processor 91, the interface circuit 92, and the memory 93 are connected to and communicate with each other by using the bus 94.

It should be noted that the processor 91 herein may be one processor, or may be a general term of multiple processing elements. For example, the processor may be a central processing unit CPU, or may be an application-specific integrated circuit ASIC, or may be configured as one or more integrated circuits for implementing this embodiment of the present invention, for example, one or more digital signal processor (English full name: digital signal processor, DSP for short) or one or more field programmable gate arrays (English full name: Field Programmable Gate Array, FPGA for short).

The memory 93 may be one storage apparatus or may be a general term of multiple storage elements, and is configured to store executable program code or a parameter, data, and the like that are required for running an access network management device. In addition, the memory 93 may include a random-access memory (English full name: random-access Memory, RAM for short), or may include a nonvolatile random access memory (English full name: nonvolatile random access memory, NVRAM for short), for example, a magnetic disk memory or a flash memory (Flash).

The bus 94 may be an industry standard architecture (English full name: Industry Standard Architecture, ISA for short) bus, a peripheral component interconnect (English full name: Peripheral Component Interconnect, PCI for short) bus, an extended industry standard architecture (English full name: Extended Industry Standard Architecture, EISA for short) bus, or the like. The bus 94 may be classified into an address bus, a data bus, a control bus, and the like. For ease of representation, only one bold line is used in FIG. 9 for representation, but it does not indicate that there is only one bus or one type of bus.

The interface circuit 92 is configured to receive status information that is sent by a first device and that is of sending data by the first device by using an unlicensed carrier.

The processor 91 is configured to adjust, according to the status information received by the interface circuit 92, a parameter used when the second device preempts the unlicensed carrier.

Optionally, the interface circuit 92 is specifically configured to: receive, by using an X2 interface, a message instruction sent by the first device, where the message instruction includes the status information; and obtain the status information from the message instruction.

Optionally, the status information includes at least one or more of the following items: a start moment of sending the data, duration of sending the data, an end moment of sending the data, or a carrier number or a carrier group number of sending the data. Optionally, the parameter is a parameter of an extended clear channel assessment ECCA.

According to the second device provided in this embodiment of the present invention, the first device can obtain the status information of sending the data by the first device by using the unlicensed carrier, and send, to the second device, the status information of sending the data, and then the second device adjusts, according to the status information, the parameter used when the second device preempts the unlicensed carrier. Because the second device can pre-learn the status information of sending the data by the first device and adjust, according to the status information, the parameter used when the second device preempts the unlicensed carrier, the second device can participate in preemption of a channel in a timelier manner, thereby increasing a probability of successfully accessing the channel.

In addition, a computer readable medium is further provided. The computer readable medium includes a computer readable instruction for performing the following operations when the computer readable instruction is executed: performing the operations of steps 101 to 104 or of steps 201 to 206 in the methods of the foregoing embodiments.

In addition, a computer program product is further provided. The computer program product includes the foregoing computer readable medium.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of steps of the methods described in the embodiments of the present invention. The foregoing storage medium includes: any medium that can store program code, such as a USB flash drive, a removable hard disk, a read-only memory (ROM for short, English full name: Read-Only Memory), a random-access memory (RAM for short, English full name: random-access memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, comprising:
obtaining (101), by a first device, status information of sending data by the first device using an unlicensed carrier; and
sending (102), by the first device to a second device, the status information of sending the data, so that the second device adjusts (104), according to the status information, a parameter used when the second device preempts the unlicensed carrier;
wherein the parameter is a parameter of an extended clear channel assessment, ECCA; wherein the status information includes at least one or more of the following items: a start moment of sending the data, duration of sending the data, an end moment of sending the data, or a carrier number or a carrier group number of sending the data.

2. The method according to claim 1, wherein the sending, by the first device to a second device, the status information of sending the data comprises:
configuring, by the first device, a message instruction on an X2 interface, wherein the message instruction comprises the status information; and
sending, by the first device, the message instruction to the second device using the X2 interface.

3. A data transmission method, comprising:
receiving (103), by a second device, status information that is sent by a first device and that is of sending data by the first device using an unlicensed carrier; and
adjusting (104), by the second device according to the status information, a parameter used when the second device preempts the unlicensed carrier;
wherein the parameter is a parameter of an extended clear channel assessment, ECCA;
wherein the status information includes at least one or more of the following items: a start moment of sending the data, duration of sending the data, an end moment of sending the data, or a carrier number or a carrier group number of sending the data.

4. The method according to claim 3, wherein the receiving, by a second device, status information that is sent by a first device and that is of sending data by the first device using an unlicensed carrier comprises:
receiving, by the second device using an X2 interface, a message instruction sent by the first device, wherein the message instruction comprises the status information; and
obtaining, by the second device, the status information from the message instruction.

5. A first device, comprising:
a processing unit (41), configured to obtain status information of sending data by the first device using an unlicensed carrier; and
a sending unit (42), configured to send, to a second device, the status information that is of sending the data and that is obtained by the processing unit, so that the second device adjusts, according to the status information, a parameter used when the second device preempts the unlicensed carrier;
wherein the status information includes at least one or more of the following items: a start moment of sending the data, duration of sending the data, an end moment of sending the data, or a carrier number or a carrier group number of sending the data.

6. The first device according to claim 5, wherein the sending unit (42) comprises:
a configuration subunit (421), adapted to configure a message instruction on an X2 interface, wherein the message instruction comprises the status information; and
a sending subunit (422), configured to send, to the second device using the X2 interface, the message instruction configured by the configuration subunit;
wherein the parameter is a parameter of an extended clear channel assessment, ECCA.

7. A second device, comprising:
a receiving unit (61), configured to receive status information that is sent by a first device and that is of sending data by the first device using an unlicensed carrier; and
a processing unit (62), configured to adjust, according to the status information received by the receiving unit, a parameter used when the second device preempts the unlicensed carrier, wherein the parameter is a parameter of an extended clear channel assessment, ECCA;
wherein the status information includes at least one or more of the following items: a start moment of sending the data, duration of sending the data, an end moment of sending the data, or a carrier number or a carrier group number of sending the data.

8. The second device according to claim 7, wherein the receiving unit (61) comprises:
a receiving subunit (611), configured to receive, using an X2 interface, a message instruction sent by the first device, wherein the message instruction comprises the status information; and
a processing subunit (612), configured to obtain the status information from the message instruction received by the receiving subunit.

9. A communications system, comprising a first device according to any one of claims 5 or 6 and a second device according to claim 7 or 8.

## Patentansprüche

1. Datenübertragungsverfahren, umfassend:
Erhalten (101), durch eine erste Vorrichtung, von Statusinformationen des Sendens von Daten durch die erste Vorrichtung unter Verwendung eines unlizenzierten Trägers und Senden (102), durch die erste Vorrichtung an eine zweite Vorrichtung, der Statusinformationen des Sendens der Daten, sodass die zweite Vorrichtung, gemäß den Statusinformationen, einen Parameter einstellt (104), der verwendet wird, wenn die zweite Vorrichtung den unlizenzierten Träger präemptiv unterbricht;
wobei der Parameter ein Parameter einer "Extended Clear Channel Assessment", ECCA, ist;
wobei die Statusinformationen zumindest eines oder mehrere der folgenden Elemente einschließen: einen Startmoment des Sendens der Daten, eine Dauer des Sendens der Daten, einen Endmoment des Sendens der Daten oder eine Trägernummer oder eine Trägergruppennummer des Sendens der Daten.

2. Verfahren nach Anspruch 1, wobei das Senden, durch die erste Vorrichtung an eine zweite Vorrichtung, der Statusinformationen des Sendens der Daten umfasst:
Konfigurieren, durch die erste Vorrichtung, einer Nachrichtenanweisung an einer X2-Schnittstelle, wobei die Nachrichtenanweisung die Statusinformationen umfasst; und
Senden, durch die erste Vorrichtung, der Nachrichtenanweisung an die zweite Vorrichtung unter Verwendung der X2-Schnittstelle.

3. Datenübertragungsverfahren, umfassend:
Empfangen (103), durch eine zweite Vorrichtung, von Statusinformationen, die durch eine erste Vorrichtung gesendet werden und die das Senden von Daten durch die erste Vorrichtung unter Verwendung eines unlizenzierten Trägers betreffen; und
Einstellen (104), durch die zweite Vorrichtung gemäß den Statusinformationen, eines Parameters, der verwendet wird, wenn die zweite Vorrichtung den unlizenzierten Träger präemptiv unterbricht;
wobei der Parameter ein Parameter einer "Extended Clear Channel Assessment", ECCA, ist;
wobei die Statusinformationen zumindest eines oder mehrere der folgenden Elemente einschließen: einen Startmoment des Sendens der Daten, eine Dauer des Sendens der Daten, einen Endmoment des Sendens der Daten oder eine Trägernummer oder eine Trägergruppennummer des Sendens der Daten.

4. Verfahren nach Anspruch 3,
wobei das Empfangen, durch eine zweite Vorrichtung, von Statusinformationen, die durch eine erste Vorrichtung gesendet werden und die das Senden von Daten durch die erste Vorrichtung unter Verwendung eines unlizenzierten Trägers betreffen, umfasst:
Empfangen, durch die zweite Vorrichtung unter Verwendung einer X2-Schnittstelle, einer Nachrichtenanweisung, die durch die erste Vorrichtung gesendet wird, wobei die Nachrichtenanweisung die Statusinformationen umfasst; und
Erhalten, durch die zweite Vorrichtung, der Statusinformationen von der Nachrichtenanweisung.

5. Erste Vorrichtung, umfassend:
eine Verarbeitungseinheit (41), die dazu ausgelegt ist, Statusinformationen des Sendens von Daten durch die erste Vorrichtung unter Verwendung eines unlizenzierten Trägers zu erhalten; und
eine Sendeeinheit (42), die dazu ausgelegt ist, die Statusinformationen, die das Senden der Daten betreffen und die durch die Verarbeitungseinheit erhalten werden, an eine zweite Vorrichtung zu senden, sodass die zweite Vorrichtung, gemäß den Statusinformationen, einen Parameter einstellt, der verwendet wird, wenn die zweite Vorrichtung den unlizenzierten Träger präemptiv unterbricht;
wobei die Statusinformationen zumindest eines oder mehrere der folgenden Elemente einschließen: einen Startmoment des Sendens der Daten, eine Dauer des Sendens der Daten, einen Endmoment des Sendens der Daten oder eine Trägernummer oder eine Trägergruppennummer des Sendens der Daten.

6. Erste Vorrichtung nach Anspruch 5, wobei die Sendeeinheit (42) umfasst:
eine Konfigurationsuntereinheit (421), die dazu konzipiert ist, eine Nachrichtenanweisung an einer X2-Schnittstelle zu konfigurieren, wobei die Nachrichtenanweisung die Statusinformationen umfasst; und
eine Sendeuntereinheit (422), die dazu ausgelegt ist, die durch die Konfigurationsuntereinheit konfigurierte Nachrichtenanweisung an die zweite Vorrichtung unter Verwendung der X2-Schnittstelle zu senden;
wobei der Parameter ein Parameter einer "Extended Clear Channel Assessment", ECCA, ist.

7. Zweite Vorrichtung, umfassend:
eine Empfangseinheit (61), die dazu ausgelegt ist, Statusinformationen, die durch eine erste Vorrichtung gesendet werden und die das Senden von Daten durch die erste Vorrichtung unter Verwendung eines unlizenzierten Trägers betreffen, zu empfangen; und
eine Verarbeitungseinheit (62), die dazu ausgelegt ist, gemäß den durch die Empfangseinheit empfangenen Statusinformationen, einen Parameter einzustellen, der verwendet wird, wenn die zweite Vorrichtung den unlizenzierten Träger präemptiv unterbricht, wobei der Parameter ein Parameter einer "Extended Clear Channel Assessment", ECCA, ist;
wobei die Statusinformationen zumindest eines oder mehrere der folgenden Elemente einschließen: einen Startmoment des Sendens der Daten, eine Dauer des Sendens der Daten, einen Endmoment des Sendens der Daten oder eine Trägernummer oder eine Trägergruppennummer des Sendens der Daten.

8. Zweite Vorrichtung nach Anspruch 7,
wobei die Empfangseinheit (61) umfasst:
eine Empfangsuntereinheit (611), die dazu ausgelegt ist, unter Verwendung einer X2-Schnittstelle eine Nachrichtenanweisung, die durch die erste Vorrichtung gesendet wird, zu empfangen, wobei die Nachrichtenanweisung die Statusinformationen umfasst; und
eine Verarbeitungsuntereinheit (612), die dazu ausgelegt ist, die Statusinformationen von der durch die Empfangsuntereinheit empfangenen Nachrichtenanweisung zu erhalten.

9. Kommunikationssystem, umfassend eine erste Vorrichtung nach einem der Ansprüche 5 oder 6 und eine zweite Vorrichtung nach Anspruch 7 oder 8.

## Revendications

1. Procédé de transmission de données, comprenant :
l'obtention (101), par un premier dispositif, d'informations d'état relatives à l'envoi de données par le premier dispositif au moyen d'une porteuse sans licence ; et
l'envoi (102), par le premier dispositif, à un deuxième dispositif, des informations d'état relatives à l'envoi des données, pour permettre au deuxième dispositif d'ajuster (104), selon les informations d'état, un paramètre utilisé lorsque le deuxième dispositif réserve la porteuse sans licence ;
le paramètre consistant en un paramètre d'une évaluation étendue de canal libre, notée ECCA ; les informations d'état comportant au moins un ou plusieurs des éléments suivants : un instant de début d'envoi des données, une durée d'envoi des données, un instant de fin d'envoi des données, ou un nombre de porteuses ou un nombre de groupes de porteuses d'envoi des données.

2. Procédé selon la revendication 1, dans lequel l'envoi, par le premier dispositif, à un deuxième dispositif, des informations d'état relatives à l'envoi des données comprend :
la configuration, par le premier dispositif, d'une instruction de message sur une interface X2, l'instruction de message comprenant les informations d'état ; et
l'envoi, par le premier dispositif, de l'instruction de message au deuxième dispositif au moyen de l'interface X2.

3. Procédé de transmission de données, comprenant :
la réception (103), par un deuxième dispositif, d'informations d'état envoyées par un premier dispositif et relatives à l'envoi de données par le premier dispositif au moyen d'une porteuse sans licence ; et
l'ajustement (104), par le deuxième dispositif, selon les informations d'état, d'un paramètre utilisé lorsque le deuxième dispositif réserve la porteuse sans licence ;
le paramètre consistant en un paramètre d'une évaluation étendue de canal libre, notée ECCA;
les informations d'état comportant au moins un ou plusieurs des éléments suivants : un instant de début d'envoi des données, une durée d'envoi des données, un instant de fin d'envoi des données, ou un nombre de porteuses ou un nombre de groupes de porteuses d'envoi des données.

4. Procédé selon la revendication 3, dans lequel la réception, par un deuxième dispositif, d'informations d'état envoyées par un premier dispositif et relatives à l'envoi de données par le premier dispositif au moyen d'une porteuse sans licence comprend :
la réception, par le deuxième dispositif, au moyen d'une interface X2, d'une instruction de message envoyée par le premier dispositif, l'instruction de message comprenant les informations d'état ; et
l'obtention, par le deuxième dispositif, des informations d'état à partir de l'instruction de message.

5. Premier dispositif, comprenant :
une unité de traitement (41), configurée pour obtenir des informations d'état relatives à l'envoi de données par le premier dispositif au moyen d'une porteuse sans licence ; et
une unité d'envoi (42), configurée pour envoyer, à un deuxième dispositif, les informations d'état relatives à l'envoi des données et obtenues par l'unité de traitement, pour permettre au deuxième dispositif d'ajuster, selon les informations d'état, un paramètre utilisé lorsque le deuxième dispositif réserve la porteuse sans licence ;
les informations d'état comportant au moins un ou plusieurs des éléments suivants : un instant de début d'envoi des données, une durée d'envoi des données, un instant de fin d'envoi des données, ou un nombre de porteuses ou un nombre de groupes de porteuses d'envoi des données.

6. Premier dispositif selon la revendication 5, dans lequel l'unité d'envoi (42) comprend :
une sous-unité de configuration (421), adaptée à configurer une instruction de message sur une interface X2, l'instruction de message comprenant les informations d'état ; et
une sous-unité d'envoi (422), configurée pour envoyer, au deuxième dispositif au moyen de l'interface X2, l'instruction de message configurée par la sous-unité de configuration ;
le paramètre consistant en un paramètre d'une évaluation étendue de canal libre, notée ECCA.

7. Deuxième dispositif, comprenant :
une unité de réception (61), configurée pour recevoir des informations d'état envoyées par un premier dispositif et relatives à l'envoi de données par le premier dispositif au moyen d'une porteuse sans licence ; et
une unité de traitement (62), configurée pour ajuster, selon les informations d'état reçues par l'unité de traitement, un paramètre utilisé lorsque le deuxième dispositif réserve la porteuse sans licence, le paramètre consistant en un paramètre d'une évaluation étendue de canal libre, notée ECCA ;
les informations d'état comportant au moins un ou plusieurs des éléments suivants : un instant de début d'envoi des données, une durée d'envoi des données, un instant de fin d'envoi des données, ou un nombre de porteuses ou un nombre de groupes de porteuses d'envoi des données.

8. Deuxième dispositif selon la revendication 7, dans lequel l'unité de réception (61) comprend :
une sous-unité de réception (611), configurée pour recevoir, au moyen d'une interface X2, une instruction de message envoyée par le premier dispositif, l'instruction de message comprenant les informations d'état ; et
une sous-unité de traitement (612), configurée pour obtenir les informations d'état à partir de l'instruction de message reçue par la sous-unité de réception.

9. Système de communication, comprenant un premier dispositif selon l'une quelconque des revendications 5 et 6 et un deuxième dispositif selon la revendication 7 ou 8.
